# EUROPÄISCHE PATENTSCHRIFT

(11) **EP 2 815 901 B1**
(45) Veröffentlichungstag und Bekanntmachung des Hinweises auf die Patenterteilung: **20.07.2016**
(21) Anmeldenummer: 14172744.6
(22) Anmeldetag: 17.06.2014
(51) Int. Cl.: B60G 11/28, B60G 7/00, B60G 9/00, F16F 9/05, F16B 2/20

(54) **Luftfederbefestigungssystem**
Air suspension fastening system
Système de fixation d'un ressort à air

(30) Priorität: 17.06.2013 DE 102013106290
(43) Veröffentlichungstag der Anmeldung: 24.12.2014
(73) Patentinhaber: Vibracoustic CV Air Springs GmbH, 20099 Hamburg (DE)
(72) Erfinder: Dehlwes, Stephan, 22844 Norderstedt (DE); Weber, Michael, 21244 Buchholz i.d.N. (DE)
(74) Vertreter: Flügel Preissner Schober Seidel

(56) Entgegenhaltungen:
- EP-A1- 1 647 424
- EP-A2- 0 590 317
- WO-A1-00/32959
- WO-A1-2012/103339
- DE-A1- 3 811 306
- DE-B- 1 048 165
- DE-U- 1 811 683
- US-A- 5 326 082
- US-A1- 2006 226 586
- US-B1- 6 398 179

## Beschreibung

Die vorliegende Erfindung betrifft ein Luftfederbefestigungssystem für Kraftfahrzeuge, insbesondere Nutzfahrzeuge, mit wenigstens einer Luftfeder und wenigstens einem Lenker zur Aufhängung eines Rades an einem Fahrgestell.

Derartige Systeme werden insbesondere zur Verbindung eines Fahrgestells eines Nutzfahrzeugs mit einem nicht angetriebenen Hinterrad verwendet. Hierzu ist der Lenker endseitig schwenkbar mit dem Fahrgestell und die Radachse fest über eine Befestigungseinrichtung mit dem Lenker verbunden. Zur Dämpfung der von der Straßenoberfläche verursachten Schwingungen ist an dem freien Ende des Lenkers eine Luftfeder angeordnet, die sich gegen das Fahrgestell abstützt.

Zur Befestigung der Luftfeder an dem Lenker ist es bekannt, die Luftfeder, insbesondere deren Abrollkolben, über eine Schraubverbindung an dem Lenker zu befestigen.

So geht aus DE 10 2008 061 190 A1 eine Achsaufhängung für eine Fahrzeugachse hervor, die einen Achslenker aufweist, an dessen freies Ende eine Luftfeder befestigt ist. Hierzu weist der Achslenker endseitig eine Auflagefläche zur Auflage der Luftfeder auf, die mit Bohrungen zur Einbringung von Schrauben für die Befestigung der Luftfeder an dem Achslenker versehen ist.

Die Befestigung der Luftfeder an dem Achslenker mittels einer Schraubverbindung hat jedoch den Nachteil, dass eine aufwändige Lenkernacharbeit, insbesondere der Auflagefläche und/oder Befestigungsfläche für die Luftfeder erforderlich ist. Da die Lenker zumeist als Schmiedeteile hergestellt werden, müssen in einem nachträglichen Arbeitsgang die Montagebohrungen eingebracht werden. Darüber hinaus können auch weitere Arbeitsschritte erforderlich sein, wie beispielsweise ein Planfräsen der Auflagefläche sowie Schweißarbeiten. Ferner bedarf es zur Anbindung eines Kunststoffabrollkolbens eines zusätzlichen Elements in Form einer Verstärkungsplatte aus Stahl, die auf die Befestigungsfläche aufgebracht werden muss.

Des Weiteren geht aus DE 10 2011 051 237 A1 ein Abrollkolben für einen Luftfederbalg hervor, der an einer angetriebenen Achse eingesetzt und über ein Anschlussteil mit dem Fahrwerk eines Kraftfahrzeugs verbunden wird. Hierzu weist der Abrollkolben an seinem Kolbenboden eine Rast- oder Schnappverbindung auf, die mit dem Anschlussteil zusammenwirkt. Nachteilig hierbei ist, dass die Krafteinleitungsebene beziehungsweise der Krafteinleitungspunkt im Bereich des Kolbenbodens angeordnet ist. Aufgrund dessen sind zur Befestigung des Abrollkolbens zusätzliche Verstärkungsmittel auf der Lenkerseite, wie beispielsweise Plattenoder ein Lenker mit vergrößerter Auflagefläche notwendig, was die Befestigung verteuert.

In WO 2012/103339 A1 ist ein Abrollkolben offenbart, der mit einer Aussparung versehen ist, in die eine strukturelle Komponente einsetzbar ist. Die strukturelle Komponente wird in der Aussparung mittels zweier Haltelaschen und einem in die Aussparung hineinragenden Vorsprung fixiert. Zur zusätzlichen Fixierung der in die Aussparung eigesetzten strukturellen Komponente können die Haltelaschen mit Halteblöcken hinterfüttert werden.

In DE 10 48 165 B ist eine Luftfeder offenbart, deren Abrollkolben an einem Schwenkarm befestigt ist. Hierzu ist an dem Schwenkarm ein Stempelhalter befestigt, der eine Kugel trägt. Der obere Teil des Abrollkolbens weist im Inneren eine kugelförmige Aussparung auf, in die der Stempel einsetzbar ist.

Ferner geht aus WO 00/32959 A1 ein Abrollkolben hervor, der an einem Radführungselement mittels eines Kugelgelenks verbunden ist. Hierzu ist in den Abrollkolben eine Aussparung eingebracht, in die das Kugelgelenk einsetzbar ist.

Ferner geht aus DE 38 11 306 A1 eine Befestigungsvorrichtung für einen Abrollkolben einer Gasfeder bei Fahrzeugaufhängungen hervor. Die Befestigungsvorrichtung ist aus einer in dem Abrollkolben ausgebildeten, ringförmigen Aussparung, einer Montageplatte, die in die Aussparung einsetzbar ist, und einem Halteelement, welches die Montageplatte in der Aussparung fixiert, gebildet.

Der vorliegenden Erfindung liegt daher die Aufgabe zugrunde, ein Luftfederbefestigungssystem zu schaffen, das eine einfache und kostengünstige Befestigung einer Luftfeder an einem Lenker gewährleistet.

Zur Lösung der Aufgabe wird ein Luftfederbefestigungssystem mit den Merkmalen des Anspruchs 1 vorgeschlagen.

Vorteilhafte Ausgestaltungen des Luftfederbefestigungssystems sind Gegenstand der abhängigen Ansprüche.

Das erfindungsgemäße Luftfederbefestigungssystem weist wenigstens eine Luftfeder und wenigstens einen Lenker zur Aufhängung eines Rades an einem Fahrgestell auf. Zur Verbindung der Luftfeder mit dem Lenker, ist eine Steckverbindung vorgesehen. Die Steckverbindung umfasst einen Einsteckzapfen und einen Einsteckschacht, wobei der Einsteckzapfen in den Einsteckschacht derart einsteckbar ist, dass der Einsteckzapfen am Boden des Einsteckschachtes zur Anlage kommt und eine Kraftübertragungsebene bildet. Der Einsteckzapfen ist aus einem umgebogenen Endabschnitt des Lenkers gebildet.

Durch die Steckverbindung wird eine einfache Montage und Befestigung der Luftfeder an dem Lenker zur Verfügung gestellt. Insbesondere entfällt eine nachträgliche aufwändige Bearbeitung einer Auflagefläche beziehungsweise einer Befestigungsfläche des Lenkers. Somit stellt das erfindungsgemäße Luftfederbefestigungssystem eine kostengünstige Lösung zur Anbindung einer Luftfeder an dem Lenker dar. Zudem ermöglicht die Steckverbindung im Vergleich zu der flachen Auflagefläche eine bessere Kraftverteilung, so dass die Lenkergeometrie optimal an den Kraftverlauf angepasst werden kann. Dadurch weist der Lenker des erfindungsgemäßen Luftfederbefestigungssystems im Vergleich zu herkömmlichen Lenkern eine höhere Festigkeit auf. Darüber hinaus ermöglicht der Festigkeitsvorteil eine Materialeinsparung, da bei gleicher Festigkeit weniger Material zur Ausbildung des Lenkers erforderlich ist. Hieraus ergibt sich auch ein Gewichtsvorteil, was folglich den Kraftstoffverbrauch reduziert. Ferner ermöglicht die Steckverbindung die Realisierung einer Drehbewegung und/oder einer Pendelbewegung der Luftfeder während des Betriebs, so dass große Winkel ausgeglichen werden können. Dadurch wirken geringere Belastungen auf einen Abrollkolben und einen Luftfederbalg der Luftfeder, was zu einer verbesserten Luftfederkennung sowie einer längeren Lebensdauer des Abrollkolbens führt. Des Weiteren ist zur Anbindung eines Kunststoffabrollkolbens keine zusätzliche Verstärkungsplatte erforderlich. Das erfindungsgemäße Luftfederbefestigungssystem wird vorteilhaft bei nicht angetriebenen Achsen, insbesondere bei nicht angetriebenen Trailerachsen verwendet.

Die Kraftübertragungsebene entspricht einer Auflagefläche zwischen dem Abrollkolben und dem Einsteckzapfen. Über die Kraftübertragungsebene erfolgt die Einleitung der während der Dämpfung der Schwingungen auftretenden Kräfte in den Lenker. Vorteilhaft sind der Einsteckzapfen und der Einsteckschacht derart ausgebildet; dass Relativbewegungen von Einsteckzapfen zu Einsteckschacht möglich sind. Dadurch kann die Luftfeder sowohl Pendelbewegungen als auch Drehbewegungen durchführen. Ferner kann der Einsteckzapfen formschlüssig in dem Einsteckschacht aufgenommen sein.

Da der Einsteckzapfen aus einem umgebogenen Endabschnitt des Lenkers gebildet ist, lässt sich dieser kostengünstig herstellen. Ferner gewährleistet die Biegung einen günstigen Kraftverlauf. Des Weiteren kann der Einsteckzapfen als separates Teil ausgebildet sein, das an einem Endabschnitt des Lenkers befestigt, insbesondere angeschweißt wird.

Vorteilhaft weist die Luftfeder wenigstens einen Abrollkolben mit einem dem Lenker zugewandten Bodenabschnitt und einem dem Lenker abgewandten Deckelabschnitt auf, wobei die Kraftübertragungsebene im Bereich des Deckelabschnitts angeordnet ist. Dadurch verschiebt die Steckverbindung den Krafteinleitungspunkt von der unteren Abrollkolbenebene, die dem Bodenabschnitt des Abrollkolbens entspricht, auf die obere Abrollkolbenebene, die dem Deckelabschnitt des Abrollkolbens entspricht. Dadurch werden die Kräfte, insbesondere bei der Verwendung eines Anschlags beziehungsweise eines Puffers im Bereich des Deckelabschnitts, unmittelbar in den Lenker geleitet. Somit sind keine zusätzlichen Verstärkungsmittel auf der Lenkerseite, wie beispielsweise Platten oder eine vergrößerte Auflagefläche am Lenker erforderlich.

Weiterhin vorteilhaft weist die Steckverbindung wenigstens eine Sicherungseinrichtung auf, die die Luftfeder vor einem Abziehen von dem Lenker in Axialrichtung sichert.

Die Sicherungseinrichtung ist vorteilhaft als Schnappverbindung ausgebildet. Unter einer Schnappverbindung wird vorliegend eine Klipsverbindung verstanden. Des Weiteren kann die Sicherungseinrichtung als Bajonettverschluss ausgebildet sein. Ferner ist es auch möglich, die Sicherungseinrichtung als kraftschlüssige Verbindung auszubilden. Hierbei kann der Einsteckzapfen mit dem Einsteckschacht verschraubt und/oder mittels einer Schellenverbindung gesichert werden.

In einer weiteren vorteilhaften Ausgestaltung ist die Schnappverbindung aus wenigstens einer in den Einsteckzapfen eingebrachten Vertiefung und wenigstens einem in den Einsteckschacht hineinragenden Federelement gebildet, wobei das Federelement nach dem Einstecken des Einsteckzapfens in den Einsteckschacht in die Vertiefung eingreift. Die Schnappverbindung oder Klipsverbindung sichert die Luftfeder vor einem Abziehen in Axialrichtung. Insbesondere durch die seitliche Führung des Einsteckzapfens innerhalb des Einsteckschachts wird die Effizienz der Klipsverbindung erhöht. Weiterhin vorteilhaft können zur Erhöhung der Abziehkraft in Axialrichtung mehrere Vertiefungen in dem Einsteckzapfen sowie mehrere hierzu korrespondierende, in den Einsteckschacht hineinragende Federelemente, die in die Vertiefungen eingreifen, vorgesehen sein.

Weiterhin vorteilhaft ist der Einsteckzapfen an dem Lenker angeordnet. In einer vorteilhaften Ausgestaltung erstreckt sich der Einsteckzapfen senkrecht zu einer Längsebene des Lenkers. Die Ausbildung des Einsteckzapfens an dem Lenker ermöglicht ein einfaches Befestigen der Luftfeder an dem Lenker.

Weiterhin vorteilhaft ist in dem Abrollkolben der Einsteckschacht eingebracht. Vorteilhaft ist der Abrollkolben aus Kunststoff hergestellt. Ein aus Kunststoff hergestellter Abrollkolben kann mittels Spritzgießen erzeugt werden, wobei die in den Einsteckschacht hineinragenden Federelemente während des Spritzgießprozesses erzeugt werden. Insbesondere kann der Abrollkolben einstückig gefertigt werden, was die Festigkeit des Abrollkolbens erhöht. Zudem weist ein aus Kunststoff gefertigter Abrollkolben ein geringes Gewicht auf und ist zudem kostengünstig in der Herstellung. Ferner kann in den Abrollkolben ein Stützelement aus Metall eingebracht werden, wobei der Einsteckzapfen an dem Stützelement anliegt. Somit wird die Kraftübertragungsebene zwischen dem Stützelement und dem Einsteckzapfen gebildet. Das Stützelement sorgt für eine verbesserte Kraftübertragung von der Luftfeder auf den Lenker. Darüber hinaus kann der Abrollkolben einen Anschlag aufweisen, der eine Bewegung der Luftfeder in Axialrichtung begrenzt. Darüber hinaus kann der Abrollkolben auch aus Metall hergestellt sein.

In einer vorteilhaften Ausgestaltung ist der Lenker durch Schmieden und/oder Gießen hergestellt. Insbesondere ein mittels Schmieden hergestellter Lenker weist eine hohe Festigkeit auf. Ferner kann sowohl der Einsteckzapfen als auch die in den Einsteckzapfen eingebrachte Vertiefung beziehungsweise die Vertiefungen während des Schmiedens und/oder Gießens erzeugt werden. Somit können alle Fertigungsschritte in den Fertigungsprozess integriert werden, wodurch die Fertigung des Lenkers vergleichsweise kostengünstig ist. Vorteilhaft ist der Lenker aus Metall, insbesondere aus Stahl, hergestellt.

Nachfolgend wird die Erfindung anhand eines Ausführungsbeispiels, das in den Figuren schematisch dargestellt ist, näher erläutert. Hierbei zeigen:
- Fig. 1: einen Längsschnitt durch ein erfindungsgemäßes Luftfederbefestigungssystem;
- Fig. 2: einen vergrößerten Ausschnitt des Längsschnitts durch das erfindungsgemäße Luftfederbefestigungssystem;
- Fig. 3: eine vergrößerte perspektivische Darstellung eines Lenkers des erfindungsgemäßen Luftfederbefestigungssystems; und

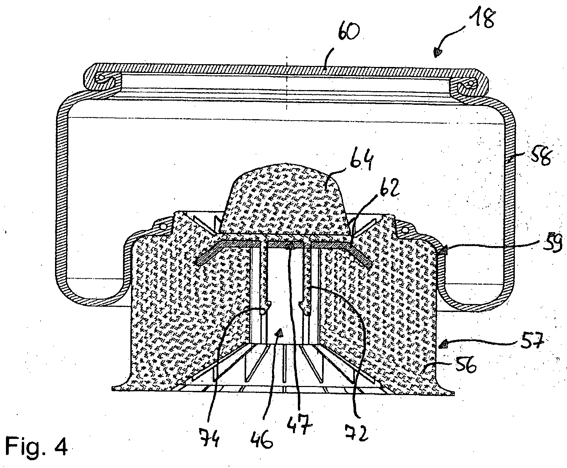

- Fig. 4: einen Längsschnitt durch eine Luftfeder des erfindungsgemäßen Luftfederbefestigungssystems.

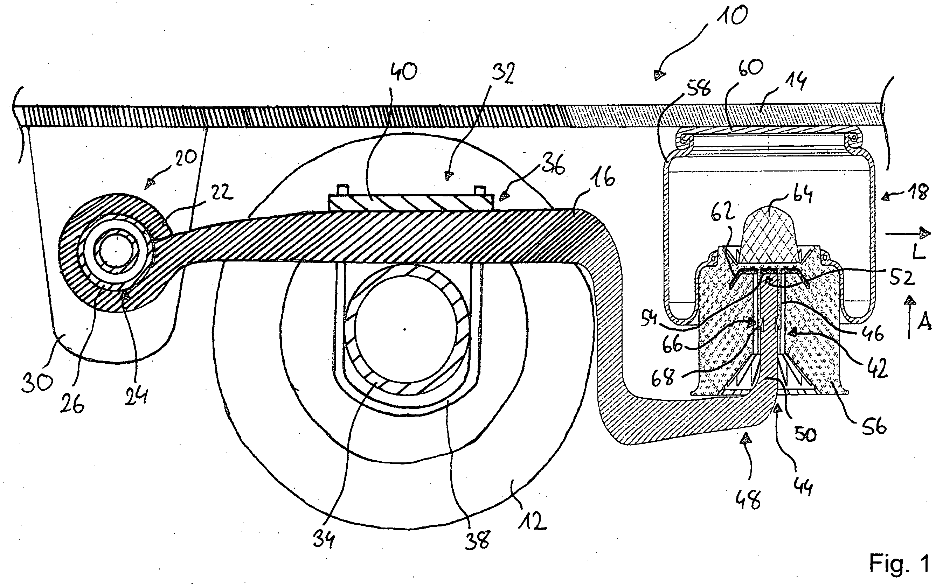

In Fig. 1 ist ein erfindungsgemäßes Luftfederbefestigungssystem 10 gezeigt, das zur Aufhängung einer nicht angetriebenen Radachse 34, insbesondere einer nicht angetriebenen Trailerachse, eines verkleinert dargestellten Rades 12 an einem Fahrgestell 14 verwendet wird. Das Luftfederbefestigungssystem 10 umfasst einen Lenker 16 und eine mit dem Lenker 16 verbundene Luftfeder 18.

Der Lenker 16 weist an einem ersten Endabschnitt 20 einen Lagerabschnitt 22 auf, der den Lenker 16 schwenkbar mit dem Fahrgestell 14 verbindet. Im vorliegenden Ausführungsbeispiel ist der Lagerabschnitt 22 aus dem ersten Endabschnitt 20 gebildet, der zu einer Aufnahmeöffnung 24 umgebogen ist. In die Aufnahmeöffnung 24 ist ein elastisches Lager 26 eingebracht, das den Lenker 16 mit einem an dem Fahrgestell 14 angebrachten Befestigungsflansch 30 schwenkbar verbindet.

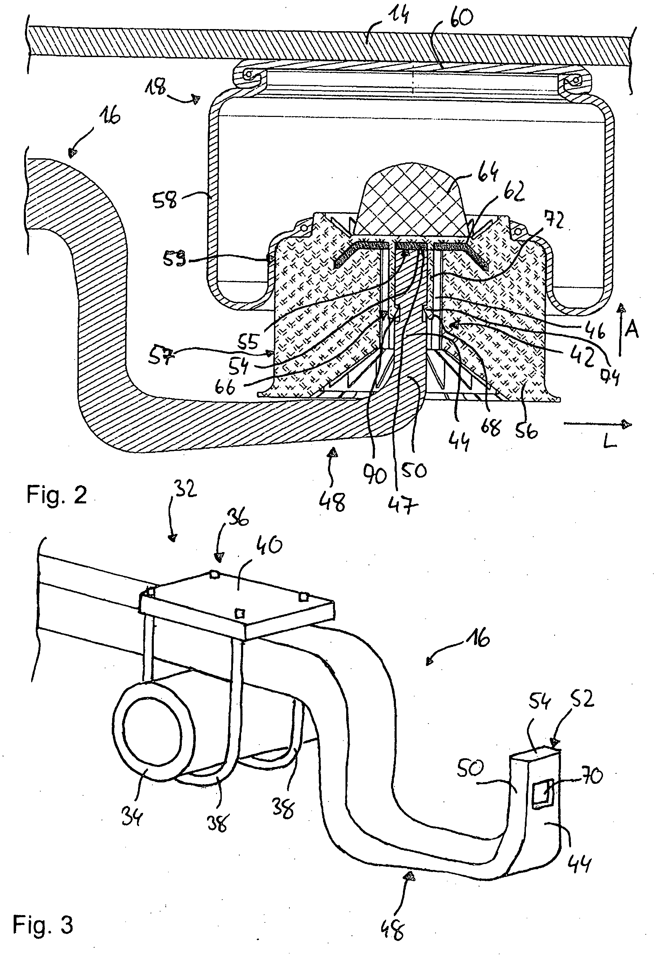

Ferner weist der Lenker 16 einen Befestigungsabschnitt 32 zur Befestigung der Radachse 34 auf. Die Befestigung der Radachse 34 erfolgt mit einer Befestigungsvorrichtung 36, die zwei Bügel 38 und eine Platte 40 umfasst. Wie insbesondere in Fig. 3 ersichtlich ist, nehmen die gebogenen Abschnitte der Bügel 38 die Radachse 34 auf. Zur Befestigung der Radachse 34 werden die Bügel 38 mit ihren freien Enden mit der Platte 40 mittels nicht dargestellter Schrauben verschraubt, wobei die Platte 40 auf einer Oberseite des Lenkers 16 aufliegt.

Wie insbesondere in den Fig. 1 und 2 ersichtlich ist, weist das Luftfederbefestigungssystem 10 eine Steckverbindung 42 zur Befestigung der Luftfeder 18 an dem Lenker 16 auf. Die Steckverbindung 42 ist aus einem Einsteckzapfen 44 und einem Einsteckschacht 46 gebildet. Der Einsteckzapfen 44 ist an einem zweiten Endabschnitt 48 des Lenkers 16 angeordnet, wobei der Einsteckzapfen 44 aus einem näherungsweise senkrecht zur Längsebene L des Lenkers 16 umgebogenen Endabschnitt 50 des zweiten Endabschnitts 48 gebildet ist. Ein freies Ende 52 des Einsteckzapfens 44 dient als Auflagefläche 54 für die Luftfeder 18 beziehungsweise deren Abrollkolben 56.

Wie insbesondere aus den Fig. 2 und 3 ersichtlich ist, umfasst die Luftfeder 18 einen Abrollkolben 56, einen Luftfederbalg oder Rollbalg 58 und eine Abschlussplatte 60. Der Rollbalg 58 ist an der Abschlussplatte 60 und an dem Abrollkolben 56 befestigt und bildet so einen luftdicht abgeschlossenen Arbeitsraum. Die Luftfeder 18 stützt sich über die Abschlussplatte 60 an dem Fahrgestell 14 ab. Der Abrollkolben 56 umfasst einen Bodenabschnitt 57 und einen Deckelabschnitt 59, wobei an dem Deckelabschnitt 59 ein Puffer oder Anschlag 64 angeordnet ist, der in den Arbeitsraum der Luftfeder hineinragt. Der Anschlag 64 begrenzt den Weg des Abrollkolbens 56 in Axialrichtung A. In den Abrollkolben 56 ist zudem ein Stützelement 62 aus Metall eingebracht. Das Stützelement 62 dient dazu, die auf den Abrollkolben 56 während der Dämpfungsarbeit einwirkende Kraft auf den Lenker 16 zu übertragen und somit für einen verbesserten Kraftfluss zu sorgen. Gemäß einer alternativen nicht dargestellten Ausführungsform kann der Abrollkolben 56 ohne Anschlag 64 und/oder Stützelement 62 ausgebildet sein.

In den Abrollkolben 56 ist ferner der Einsteckschacht 46 eingebracht. Wie insbesondere in Fig. 2 ersichtlich ist, liegt im eingesteckten oder aufgesteckten Zustand die Auflagefläche 54 des Einsteckzapfens 44 an einem Boden 47 des Einsteckschachts 46, insbesondere an einer Unterseite des Stützelements 62, an und bildet eine Kraftübertragungsebene 55 aus. Hierdurch verschiebt die Steckverbindung 42 die Kraftübertragungsebene 55 in den Bereich des Deckelabschnitts 59, so dass Kräfte, insbesondere große Kräfte, unmittelbar in den Lenker 16 eingeleitet werden. Dadurch sind keine zusätzlichen Verstärkungsmittel auf der Lenkerseite, wie beispielsweise Platten oder eine vergrößerte Lenkerauflagefläche notwendig. Zur Sicherung des Abrollkolbens 56 vor einem Abziehen in Axialrichtung A von dem Einsteckzapfen 44 weist die Steckverbindung 42 eine Sicherungseinrichtung 66 auf. Im vorliegenden Ausführungsbeispiel ist die Sicherungseinrichtung 66 als Klipsverbindung 68 ausgebildet. Die Klipsverbindung 68 umfasst zwei in den Einsteckzapfen 44 eingebrachte Vertiefungen 70 und zwei dazu in den Einsteckschacht 46 hineinragende Federelemente 72, die in die Vertiefungen 70 eingreifen. Die Federelemente 72 sind an dem Boden 47 des Einsteckschachts 46 angeordnet und ragen in den Einsteckschacht 46 hinein. Ferner weisen die Federelemente 72 an ihren freien Enden einen Rasthaken 74 auf, der in die Vertiefung 70 eingreift.

Zur Befestigung der Luftfeder 18 auf dem Lenker 16 wird die Luftfeder 18 auf den Einsteckzapfen 44 gesteckt. Hierbei wird der Einsteckzapfen 44 in den Einsteckschacht 46 des Abrollkolbens 56 eingeführt, bis die Auflagefläche 54 des Einsteckzapfens 44 am Boden 47 des Einsteckschachts 46 beziehungsweise an der Unterseite des Stützelements 62 zur Auflage kommt und so die Kraftübertragungsebene 55 bildet. Während des Einsteckvorgangs werden die Federelemente 72 elastisch ausgelenkt und schnappen in die Vertiefungen 70 ein, wenn sich die Rasthaken 74 auf Höhe der Vertiefungen 70 befinden. Durch den in den Einsteckschacht 46 weit hineinragenden Einsteckzapfen 44 wird der Abrollkolben 56 seitlich geführt. Dies erhöht die Effizienz der Klipsverbindung 68. Darüber hinaus sind der Einsteckzapfen 44 und der Einsteckschacht 46 derart ausgebildet, dass der Abrollkolben 56 im aufgesteckten Zustand eine Pendelbewegung sowie eine Drehbewegung durchführen kann. Hierdurch können während der Dämpfungsarbeit auftretende größere Winkel ausgeglichen werden. Dies führt zu einer verbesserten Luftfederkennung sowie einer längeren Lebensdauer des Abrollkolbens 56.

Der Lenker 16 kann mittels Schmieden und/oder Gießen hergestellt werden, wobei der Einsteckzapfen 44 und die darin eingebrachten Vertiefungen 70 während des Gießens und/oder Schmiedens erzeugt werden. Der Abrollkolben 56 ist aus Kunststoff mittels Spritzgießens hergestellt, wobei das Stützelement 62 vor dem Spritzgießen in eine Spritzgußform eingebracht wird, so dass das Stützelement 62 mit der Kunststoffmasse umspritzt wird. Die Federelemente 72 sind vorteilhaft an dem Boden des Einsteckschachts 46 angespritzt. In einer alternativen Ausgestaltung kann der Abrollkolben 56 aus Metall hergestellt sein.

Das erfindungsgemäße Luftfederbefestigungssystem 10 zeichnet sich insbesondere durch seine Steckverbindung 42 zur Befestigung der Luftfeder 18 an dem Lenker 16 aus. Hierdurch wird eine vereinfachte Montage der Luftfeder 18 an dem Lenker 16 gewährleistet. Zudem entfallen aufwändige nachträgliche Bearbeitungsschritte des Lenkers 16. Darüber hinaus kann die Lenkergeometrie an den Kraftverlauf angepasst werden. Ferner ermöglicht die Steckverbindung 42, dass der Abrollkolben 56 Pendelbewegungen und Drehbewegungen durchführen kann. Dies wiederum führt zu einer verbesserten Luftfederkennung und zu einer erhöhten Lebensdauer des Abrollkolbens 56. Zudem verschiebt die Steckverbindung 42 die Kraftübertragungsebene 55 in den Bereich des Deckelabschnitts 59, so dass keine zusätzlichen Verstärkungsmittel auf der Lenkerseite erforderlich sind.

### Bezugszeichenliste

- 10: Luftfederbefestigungssystem
- 12: Rad
- 14: Fahrgestell
- 16: Lenker
- 18: Luftfeder
- 20: erster Endabschnitt
- 22: Lagerabschnitt
- 24: Aufnahmeöffnung
- 26: elastisches Lager
- 30: Befestigungsflansch
- 32: Befestigungsabschnitt
- 34: Radachse
- 36: Befestigungsvorrichtung
- 38: Bügel
- 40: Platte
- 42: Steckverbindung
- 44: Einsteckzapfen
- 46: Einsteckschacht
- 47: Boden
- 48: zweiter Endabschnitt
- 50: umgebogener Endabschnitt
- 52: freies Ende
- 54: Auflagefläche
- 55: Kraftübertragungsebene
- 56: Abrollkolben
- 57: Bodenabschnitt
- 58: Rollbalg
- 59: Deckelabschnitt
- 60: Abschlussplatte
- 62: Stützelement
- 64: Anschlag
- 66: Sicherungseinrichtung
- 68: Klipsverbindung
- 70: Vertiefung
- 72: Federelement
- 74: Rasthaken

- L: Längsebene
- A: Axialrichtung

## Patentansprüche

1. Luftfederbefestigungssystem (10) für Kraftfahrzeuge, insbesondere Nutzfahrzeuge, mit wenigstens einer Luftfeder (18) und wenigstens einem Lenker (16) zur Aufhängung eines Rades (12) an einem Fahrgestell (14), wobei eine Steckverbindung (42) vorgesehen ist, die die Luftfeder (18) mit dem Lenker (16) verbindet, **dadurch gekennzeichnet, dass** die Steckverbindung (42) einen Einsteckzapfen (44) und einen Einsteckschacht (46) umfasst, dass der Einsteckzapfen (44) in den Einsteckschacht (46) derart einsteckbar ist, dass der Einsteckzapfen (44) am Boden (47) des Einsteckschachtes (46) zur Anlage kommt und eine Kraftübertragungsebene (55) bildet und dass der Einsteckzapfen (44) aus einem umgebogenen Endabschnitt (50) des Lenkers (16) gebildet ist.

2. Luftfederbefestigungssystem nach Anspruch 1, **dadurch gekennzeichnet, dass** die Luftfeder (18) wenigstens einen Abrollkolben (56) mit einem dem Lenker (16) zugewandten Bodenabschnitt (57) und einem dem Lenker (16) abgewandten Deckelabschnitt (59) aufweist, wobei die Kraftübertragungsebene (55) im Bereich des Deckelabschnitts (59) angeordnet ist.

3. Luftfederbefestigungssystem nach einem der vorhergehenden Ansprüche, **dadurch gekennzeichnet, dass** die Steckverbindung (42) wenigstens eine Sicherungseinrichtung (66) aufweist, die die Luftfeder (18) vor einem Abziehen von dem Lenker (16) in Axialrichtung (A) sichert.

4. Luftfederbefestigungssystem nach Anspruch 3, **dadurch gekennzeichnet, dass** die Sicherungseinrichtung (66) als Schnappverbindung (68) ausgebildet ist.

5. Luftfederbefestigungssystem nach Anspruch 4, **dadurch gekennzeichnet,** dass-die Schnappverbindung (68) aus wenigstens einer in den Einsteckzapfen (44) eingebrachten Vertiefung (70) und wenigstens einem in den Einsteckschacht (46) hineinragenden Federelement (72) gebildet ist, wobei das Federelement (72) nach dem Einstecken des Einsteckzapfens (44) in den Einsteckschacht (46) in die Vertiefung (70) eingreift.

6. Luftfederbefestigungssystem nach einem der vorhergehenden Ansprüche, **dadurch gekennzeichnet, dass** der Einsteckzapfen (44) an dem Lenker (16) angeordnet ist.

7. Luftfederbefestigungseinrichtung nach einem der vorhergehenden Ansprüche, **dadurch gekennzeichnet, dass** sich der Einsteckzapfen (44) senkrecht zu einer Längsebene (L) des Lenkers (16) erstreckt.

8. Luftfederbefestigungssystem nach einem der vorhergehenden Ansprüche, **dadurch gekennzeichnet, dass** in dem Abrollkolben (56) der Einsteckschacht (46) eingebracht ist.

9. Luftfederbefestigungssystem nach einem der vorhergehenden Ansprüche, **dadurch gekennzeichnet, dass** der Lenker (16) durch Schmieden und/oder Gießen hergestellt ist.

## Claims

1. An air spring attachment system (10) for motor vehicles, particularly utility vehicles, with at least one air spring (18) and at least one link (16) for the suspension of a wheel (12) on a chassis (14), wherein a plug connection (42) connecting the air spring (18) with the link (16) is provided, **characterised in that** the plug connection (42) comprises a plug-in pin (44) and a plug-in slot (46), that the plug-in pin (44) is pluggable into the plug-in slot (46) in such a way that the plug-in pin (44) comes to abut on the bottom (47) of the plug-in slot (46) and forms a force transmission plane (55) and that the plug-in pin (44) is formed from a bent end section (50) of the link (16).

2. The air spring attachment system according to claim 1, **characterised in that** the air spring (18) has at least one rolling piston (56) with a bottom section (57) facing towards the link (16) and a cover section (59) facing away from the link (16), wherein the force transmission plane (55) is disposed in the region of the cover section (59).

3. The air spring attachment system according to any of the preceding claims, **characterised in that** the plug connection (42) has at least one securing device (66) that secures the air spring (18) from being pulled off the link (16) in an axial direction (A).

4. The air spring attachment system according to claim 3, **characterised in that** the securing device (66) is configured as a snap connection (68).

5. The air spring attachment system according to claim 4, **characterised in that** the snap connection (68) is formed from at least one depression (70) embedded into the plug-in pin (44) and at least one spring member (72) protruding into the plug-in slot (46), wherein the spring member (72) engages with the depression (70) after the plug-in pin (44) has been plugged into the plug-in slot (46).

6. The air spring attachment system according to any of the preceding claims, **characterised in that** the plug-in pin (44) is disposed on the link (16).

7. The air spring attachment system according to any of the preceding claims, **characterised in that** the plug-in pin (44) extends perpendicularly to a longitudinal plane (L) of the link (16).

8. The air spring attachment system according to any of the preceding claims, **characterised in that** the plug-in slot (46) is embedded into the rolling piston (56).

9. The air spring attachment system according to any of the preceding claims, **characterised in that the** link (16) is made by forging and/or casting.

## Revendications

1. Système de fixation de ressort pneumatique (10) pour véhicules automobiles, en particulier pour véhicules utilitaires, comprenant au moins un ressort pneumatique (18) et au moins un bras (16) pour la suspension d'une roue (12) sur un châssis (14), dans lequel il est prévu une liaison par enfichage (42) qui relie le ressort pneumatique (18) avec le bras (16),
**caractérisé en ce que** la liaison par enfichage (42) inclut un tenon d'enfichage (44) et un manchon d'enfichage (46), **en ce que** le tenon d'enfichage (44) est susceptible d'être enfiché dans le manchon d'enfichage (46) de telle façon que le tenon d'enfichage (44) vient en appui au fond (47) du manchon d'enfichage (46) et fonne un plan de transmission de forces (55), et **en ce que** le tenon d'enfichage (44) est fonné à partir d'un tronçon terminal rabattu (50) du bras (16).

2. Système de fixation de ressort pneumatique selon la revendication 1, **caractérisé en ce que** le ressort pneumatique (18) comprend au moins un piston déroulant (56) avec une portion de fond (57) tournée vers le bras (16), et une portion de couvercle (59) détournée du bras (16), et le plan de transmission de forces (55) est agencé dans la région de la portion de couvercle (59).

3. Système de fixation de ressort pneumatique selon l'une des revendications précédentes, **caractérisé en ce que** la liaison par enfichage (42) comprend au moins un moyen de sécurisation (66) qui sécurise le ressort pneumatique (18) vis-à-vis d'une extraction par rapport au bras (16) en direction axiale (A).

4. Système de fixation de ressort pneumatique selon la revendication 3, **caractérisé en ce que** le moyen de sécurisation (66) est réalisé sous forme de liaison à encliquetage (68).

5. Système de fixation de ressort pneumatique selon la revendication 4, **caractérisé en ce que** la liaison à encliquetage (68) est formée d'au moins un renfoncement (70) ménagé dans le tenon d'enfichage (44) et d'au moins un élément à ressort (72) en saillie dans le manchon d'enfichage (46), dans lequel l'élément à ressort (72) s'engage dans le renfoncement (70) après enfichage du tenon d'enfichage (44) dans le manchon d'enfichage (46).

6. Système de fixation de ressort pneumatique selon l'une des revendications précédentes, **caractérisé en ce que** le tenon d'enfichage (44) est agencé sur le bras (16).

7. Système de fixation de ressort pneumatique selon l'une des revendications précédentes, **caractérisé en ce que** le tenon d'enfichage (44) s'étend perpendiculairement à un plan longitudinal (L) du bras (16).

8. Système de fixation de ressort pneumatique selon l'une des revendications précédentes, **caractérisé en ce que** le manchon d'enfichage (46) est intégré dans le piston à déroulement (56).

9. Système de fixation de ressort pneumatique selon l'une des revendications précédentes, **caractérisé en ce que** le bras (16) est fabriqué par forgeage et/ou par coulée.
